# EUROPÄISCHE PATENTSCHRIFT

(11) **EP 3 204 186 B1**
(45) Veröffentlichungstag und Bekanntmachung des Hinweises auf die Patenterteilung: **22.08.2018**
(21) Anmeldenummer: 15787479.3
(22) Anmeldetag: 06.10.2015
(51) Int. Cl.: B23P 19/00, B21J 15/32

(54) **ZUFÜHREINHEIT**
FEED UNIT
UNITÉ D'AMENÉE

(30) Priorität: 06.10.2014 DE 102014220194
(43) Veröffentlichungstag der Anmeldung: 16.08.2017
(73) Patentinhaber: Richard Bergner Verbindungstechnik GmbH & Co.KG, 91126 Schwabach (DE)
(72) Erfinder: SKOLAUDE, Andreas, 91126 Schwabach (DE)
(74) Vertreter: FDST Patentanwälte
(86) Internationale Anmeldenummer: PCT/EP2015/073051
(87) Internationale Veröffentlichungsnummer: WO 2016/055478

(56) Entgegenhaltungen:
- EP-A1- 1 080 826
- FR-A1- 2 796 581
- JP-A- H02 139 133

## Beschreibung

Die Erfindung betrifft eine Zuführeinheit zur Zuführung von Verbindungselementen, insbesondere von Muttern, aus einer Aufnahmeposition entlang einer Zuführrichtung an eine Übergabeposition, wobei die Zuführeinheit ein Aufnahmeteil aufweist, dem das Verbindungselement zuführbar ist.

Eine derartige Zuführeinheit ist beispielsweise aus der DE 102 95 718 B4 zu entnehmen. Bei automatisierten Verarbeitungsmaschinen, beispielsweise zum automatisierten Einbringen von Verbindungselementen in Werkstücke, werden die Verbindungselemente der Verarbeitungsmaschine häufig automatisch zugeführt. Hierzu sind grundsätzlich unterschiedliche Zuführeinheiten bekannt, welche ein jeweiliges Verbindungselement jeweils lagerichtig an einer definierten Übergabeposition bereitstellen müssen.

Bei den Verarbeitungsmaschinen handelt es sich häufig um Pressen oder Setzmaschinen, mit deren Hilfe ein jeweiliges Verbindungselement in das Werkstück eingepresst wird. Bei den Verbindungselementen handelt es sich beispielsweise um Einpresselemente wie Einpressmuttern oder Einpressbolzen.

Im Hinblick auf ein prozesssicheres Setzen derartiger Verbindungselemente muss durch die Zuführeinheit gewährleistet werden, dass für einen jeweiligen Arbeitstakt jeweils ein Verbindungselement an der Übergabeposition lagerichtig zur Verfügung steht. In vielen Gebieten, beispielsweise im Bereich der Automobilindustrie, kommt es hierbei auch auf hohe Taktraten an.

Aus der eingangs erwähnten DE 102 95 718 B4 ist eine Vorrichtung zur Zuführung von Verbindungselementen, insbesondere von Muttern zu einem Setzkopf einer Presse zu entnehmen. Die jeweilige Mutter wird dabei mittels Druckluft und mittels eines Schlauches in eine Förderstrecke eingeschossen. Diese weist eine Staustrecke auf, auf der mehrere Muttern aneinandergereiht werden. Mit Hilfe einer Schubeinheit werden die einzelnen Verbindungselemente in Richtung der Förderstrecke jeweils in die Übergabeposition geschoben.

Aus der EP 1 080 826 A1 ist eine Vorrichtung zum Setzen eines selbststanzenden Verbindungselements mit den Merkmalen des Oberbegriffs des Anspruchs 1 zu entnehmen. In einer Staustrecke werden die Verbindungselementen aneinandergereiht. Mit Hilfe eines Transportmechanismus wird ein jeweiliges Verbindungselement aus der Staustrecke entnommen und in eine Setzposition überführt, aus der das Verbindungselement mit Hilfe eines Stempels in eine Werkstück eingepresst wird. Der Transportmechanismus weist dabei ein an einem verfahrbaren Block gehaltenen Greifer auf, der drehbar gelagert ist, um das Verbindungselement um 90° drehen zu können.

Weitere Vorrichtungen zum Setzen von Verbindungselementen mit Zuführeinheiten für die Verbindungselemente sind beispielsweise zu entnehmen aus JP H02 139 133 A oder FR 2 796 581 A1.

Ausgehend hiervon liegt der Erfindung die Aufgabe zugrunde, eine kompaktbauende Zuführeinheit anzugeben, mit der eine hohe Taktrate möglich ist.

Die Aufgabe wird gemäß der Erfindung gelöst durch eine Zuführeinheit mit dem Merkmal des Anspruchs 1. Bevorzugte Ausgestaltungen der Zuführeinheit sind in den abhängigen Ansprüchen angegeben. Die Zuführeinheit dient zur Zuführung von Verbindungselementen, insbesondere von Muttern aus einer Aufnahmeposition entlang einer Zuführrichtung an eine Übergabeposition einer Verarbeitungsmaschine, insbesondere einer Setzmaschine, beispielsweise eine Presse. Die Zuführeinheit umfasst dabei ein Aufnahmeteil, dem ein jeweiliges Verbindungselement mittels einer Zuführung, beispielsweise mittels einer Staustrecke oder auch mittels eines Schlauchs, vorzugsweise einzelweise zuführbar ist. Innerhalb des Aufnahmeteils ist ein Kopfstück verschieblich in Zuführrichtung gelagert. Das Kopfstück weist einen Aufnahmebereich für das Verbindungselement auf, in den das Verbindungselement mittels der Zuführung eingebracht wird. Diese Position definiert die Aufnahmeposition.

Weiterhin umfasst die Zuführeinheit eine Schubeinheit zum Verschieben des Kopfstücks entlang der Zuführrichtung bis zu einer Zwischenposition innerhalb des Aufnahmeteils. Bei diesem Verschieben wird daher das Verbindungselement mit dem Kopfstück in Zuführrichtung gefördert. Während dieser Vorschubbewegung in die Zwischenposition wird dabei zugleich das Kopfstück und mit diesem der Aufnahmebereich um die Zuführrichtung verdreht, so dass also auch das im Aufnahmebereich einliegende Verbindungselement verdreht wird. Hierbei erfolgt eine Verdrehung in eine gewünschte Orientierung für die Übergabeposition. Es erfolgt also eine Verdrehung des Aufnahmebereichs aus einer ersten Drehposition, die der Aufnahmebereich an der Aufnahmeposition einnimmt, in eine zweite Drehposition, die der Aufnahmebereich in der Zwischenposition einnimmt. Weiterhin umfasst die Zuführeinheit ein Schieberelement, welches mit der Schubeinheit gekoppelt ist. Das Schieberelement ist relativverschieblich im Kopfstück geführt. Das Schieberelement ist aus der Zwischenposition bis zur Übergabeposition in-nerhalb des Kopfstücks in Zuführrichtung versetzbar. Im Betrieb wird hierbei ein im Aufnahmebereich befindliches Verbindungselement aus dem Kopfstück heraus an die Übergabeposition verbracht, insbesondere geschoben, wodurch das Verbindungselement für den eigentlichen Setzvorgang zur Verfügung steht.

Durch die spezielle konstruktive Ausgestaltung zur Überführung des Verbindungselements von der Aufnahmeposition in die Übergabeposition, insbesondere mit der Drehung des Verbindungselements, ist eine kompakte Bauweise insofern ermöglicht, als dass die Zuführung des Verbindungselements zur Zuführeinheit winklig und insbesondere senkrecht zur Zuführrichtung erfolgen kann. Da die erforderliche Drehung bei der Vorschubbewegung erfolgt, ist zudem eine hohe Taktrate ermöglicht.

Im Hinblick auf eine prozesssichere Ausgestaltung ist die Drehvorrichtung durch eine mechanische Zwangsführung gebildet. Diese weist bevorzugt eine Steuerhülse auf, an der das Kopfstück zwangsgeführt ist. Die Steuerhülse ist drehfest angeordnet.

Hierzu weist die Zwangsführung zweckdienlicherweise eine vorgegebene Kurvenbahn auf, die bei der Vorschubbewegung des Kopfstücks mit einem Steuerelement zur Drehung des Kopfstücks zusammenwirkt. Bei der Kurvenbahn kann es sich hierbei um eine nutartige Führung oder auch um einen Steg handeln. Umgekehrt handelt es sich bei dem Steuerelement um ein hierzu komplementäres Element, also beispielsweise um einen Steuerstift oder auch eine Ausnehmung. Die Kurvenbahn wird dabei durch die Steuerhülse vorgegeben, das heißt an der Steuerhülse ist eine Nut bzw. ein Steg ausgeformt. An der Kurvenbahn wird das Steuerelement entlanggeführt, welches mit dem Kopfstück drehfest verbunden ist, so dass eine Drehbewegung des Kopfstücks relativ zur Steuerhülse und damit auch relativ zum Aufnahmeteil hervorgerufen wird.

In bevorzugter Ausgestaltung ist das Kopfstück an der Schubeinheit federnd gelagert. Hierzu ist insbesondere ein Federelement vorgesehen, welches beispielsweise als Druckfeder und insbesondere als Schraubenfeder ausgebildet ist. Die federnde Lagerung des Kopfstücks ist insbesondere für die Überführung des Verbindungselements aus der Zwischenposition in die Übergabeposition von Vorteil, da hierbei eine Relativverschiebung zwischen der Schubeinheit und Kopfstück erfolgt.

Um dies zuverlässig zu ermöglichen, ist das Schieberelement an der Schubeinheit befestigt. In Zuführrichtung ist zwischen dem Schieberelement und der Schubeinheit keine Relativverschiebung ermöglicht. Vorzugsweise ist das Schieberelement an der Schubeinheit weiterhin auch drehfest angeordnet. Bei der Zustellbewegung wird daher das Schieberelement mittels der Schubeinheit relativ zum Kopfstück weiter verschoben und schiebt dabei das Verbindungselement aus dem Aufnahmebereich des Kopfstücks heraus, so dass das Verbindungselement aus dem Kopfstück heraustritt und damit für die Verarbeitungsmaschine frei zugänglich in der Übergabeposition vorliegt. Die Übergabeposition befindet sich daher allgemein bereits innerhalb der Verarbeitungsmaschine, insbesondere Presse.

Zweckdienlicherweise wird das Kopfstück gegen einen Anschlag des Schieberelements federnd gepresst, so dass es bezüglich der Relativverschieblichkeit zum Schieberelement in eine Grundposition gepresst wird. In diese Grundposition wird das Kopfstück nach Übergabe des Verbindungselements in die Übergabeposition wieder zurückgeführt. Bei der Grundposition handelt es sich also um eine definierte Relativposition zwischen Kopfstück und Schubeinheit und damit auch zwischen Kopfstück und Schieberelement. Dieses Rückführen erfolgt dabei insbesondere automatisch mit Hilfe des Federelements, gegen dessen Federkraft das Kopfstück an der Schubeinheit gelagert ist. Der mechanische Anschlag begrenzt also den Verstellweg des Kopfstücks relativ zu der Schubeinheit bzw. relativ zum Schieberelement.

In bevorzugter Ausgestaltung sind das Schieberelement und das Kopfstück mittels einer Nut-Zapfenführung aneinander geführt. Gleichzeitig ist durch diese Führung in zweckdienlicher Ausgestaltung der mechanische Anschlag gebildet. Der Zapfen schlägt also gegen einen Endabschnitt der Nut an. Zweckdienlicherweise ist dabei die Nut im Schieberelement und der Zapfen am Kopfstück ausgebildet. Bei dem Zapfen handelt es sich dabei vorzugsweise um einen Bolzen, welcher die Nut durchdringt und mit seinen gegenüberliegenden Endabschnitten im Kopfstück angeordnet und insbesondere dort befestigt ist.

Für die Ausübung der Drehbewegung ist weiterhin das Schieberelement im Kopfstück drehfest gelagert und mittels der mechanischen Zwangsführung wird die Drehbewegung über das Schieberelement auf das Kopfstück übertragen. Die von der Steuerhülse bereitgestellte Kurvenbahn wirkt also nicht direkt mit dem Kopfstück zusammen, sondern mittelbar über das Schieberelement.

Zur definierten Begrenzung des Vorschubwegs und zur Definition der Zwischenposition ist zweckdienlicherweise bei montierter Zuführeinheit ein weiterer mechanischer Anschlag vorgesehen, gegen den das Kopfstück bei Erreichen der Zwischenposition anschlägt. Dieser ist bevorzugt durch ein Bauteil des Verarbeitungswerkzeugs gebildet, an dem die Zuführeinheit befestigt ist.

Das Aufnahmeteil ist allgemein nach Art einer Hülse oder auch rohrförmig ausgebildet, weist also einen zentralen Aufnahmeraum für das Kopfstück auf. Der Aufnahmeraum ist dabei insbesondere zylindrisch, um die gewünschte Drehbewegung des Kopfstückes ausführen zu können. Für die vorgesehene Zuführung der Verbindungselemente in den Aufnahmebereich, die im Wesentlichen in radialer Richtung, also allgemein winklig und insbesondere in etwa senkrecht zur Zuführrichtung erfolgen soll, weist das Aufnahmeteil eine geeignete seitliche Zufuhröffnung auf. An diese Zuführöffnung ist die bereits erwähnte Zuführung, also beispielsweise ein Zuführschlauch oder eine sonstige Zuführvorrichtung, wie beispielsweise eine Staustrecke etc. anschließbar.

Innerhalb des Kopfstücks ist allgemein ein Führungskanal für das Verbindungselement ausgebildet. Ein Teilabschnitt dieses Führungskanals wird durch den Aufnahmebereich gebildet, in den das Verbindungselement im Betrieb eingebracht wird. Der Führungskanal erstreckt sich in Zuführrichtung und endet stirnseitig am Ende des Kopfstückes, um das Verbindungselement aus dem Kopfstück wieder herausführen zu können. Der Führungskanal dient zur Führung des Verbindungselementes in die Übergabeposition.

Um das Verbindungselement innerhalb des Aufnahmebereichs an einer gewünschten Position zu fixieren, weist das Kopfstück weiterhin ein Klemmelement auf, welches also eine Klemmkraft auf ein jeweiliges im Aufnahmebereich einliegendes Verbindungselement ausübt. Das Klemmelement presst hierbei das Verbindungselement gegen einen Wandbereich des Aufnahmebereichs und damit des Führungskanals. Die Klemmkraft ist dabei insbesondere senkrecht zur Zuführrichtung und auch senkrecht zu einer Einführrichtung orientiert. Die Einführrichtung ist dabei durch die Richtung festgelegt, entlang derer ein jeweiliges Verbindungselement in den Aufnahmebereich eingebracht wird.

Zweckdienlicherweise dringt das Klemmelement bereits federnd in den Aufnahmebereich ein, wenn im Aufnahmebereich kein Verbindungselement angeordnet ist. Das Klemmelement dringt also in den freien Raum ein, welcher später von dem Verbindungselement eingenommen wird. Das Verbindungselement muss daher das Klemmelement gegen eine elastische Federkraft aus dem Aufnahmebereich zumindest teilweise verdrängen. Hierdurch erfolgt mittels des Klemmelements ein schonendes Abbremsen des Verbindungselements, wodurch eine Beschädigung des Verbindungselements beim Überführen in die Aufnahmeposition vermieden wird.

Zweckdienlicherweise ist das Klemmelement schwenkbar am Kopfstück gelagert, so dass es also in den Aufnahmebereich einschwenkt.

Im Hinblick auf eine Steuerung des gesamten Arbeitsprozesses ist erforderlich, dass das Vorhandensein eines Verbindungselements erkannt wird. Zweckdienlicherweise erfolgt dies mit Hilfe eines Sensorelements. Dieses ist vorzugsweise zur Erfassung einer Bewegung des Klemmelements ausgebildet.

Insbesondere wird die Schwenkbewegung des Klemmelements erfasst, wenn dieses von einem Verbindungselement gegen die Federkraft verschwenkt wird. Bei dem Sensorelement handelt es sich insbesondere um einen Abstands- oder Näherungssensor.

Bei einem entsprechenden Sensorsignal, welches also das Vorhandensein eines Verbindungselements angibt, wird ein jeweiliger Arbeitszyklus gestartet. Hierzu sind insbesondere folgende Arbeitsschritte vorgesehen: Mittels der Schubeinheit erfolgt ein insbesondere kontinuierliches Versetzen des Kopfstücks ausgehend von der Aufnahmeposition in Zuführrichtung. Nach Erreichen der Zwischenposition wird das im Aufnahmebereich einliegende Verbindungselement mittels des Schieberelements in die Übergabeposition verschoben. Anschließend fährt die Schubeinheit wieder zurück, wobei hierbei zunächst das Schieberelement relativ zum Kopfstück zurückfährt, bis Kopfstück und Schieberelement wieder in ihrer Grundposition relativ zueinander orientiert sind. Anschließend fahren das Kopfstück und das Schieberelement gemeinsam in die Ausgangsposition zurück, so dass ein weiteres Verbindungselement in den Aufnahmebereich eingebracht werden kann. Bei der Verschiebebewegung von der Aufnahmeposition in die Zwischenposition und wieder zurück erfolgt dabei jeweils die Drehbewegung des Kopfstückes insbesondere um 90°.

Ein Ausführungsbeispiel der Erfindung wird nachfolgend anhand der Figuren näher erläutert. Diese zeigen in teilweise vereinfachten Darstellungen:
- Fig. 1: Eine Schnittansicht durch eine Zuführeinheit,
- Fig. 2: eine perspektivische Darstellung nach Art einer teilweisen Schnittansicht, bei der sich das Kopfstück in einer Aufnahmeposition befindet,
- Fig. 3: eine zur Fig. 2 vergleichbare Darstellung, wobei ergänzend ein Klemmelement sowie ein Sensorelement dargestellt sind,
- Fig. 4: eine weitere perspektivische Darstellung nach Art einer teilweisen Schnittansicht, bei der sich das Kopfstück nach einer 90°-Drehung in einer Zwischenposition befindet sowie
- Fig. 5: eine zu der Fig. 4 vergleichbare ausschnittsweise Darstellung, bei der das Verbindungselement sich in einer Übergabeposition außerhalb des Kopfstücks befindet.

In den Figuren sind gleichwirkende Teile jeweils mit den gleichen Bezugszeichen versehen.

Die in den Figuren dargestellte Zuführeinheit 2 erstreckt sich entlang einer Längs- oder Zuführrichtung 4. Sie weist ein vorderes Aufnahmeteil 6 sowie ein rückseitiges Schubteil 8 auf. Über einer im Ausführungsbeispiel bügelartige Halterung 10 ist weiterhin ein Steuerblock 12 befestigt, über den die einzelnen Bewegungen und Arbeitstakte gesteuert werden. Der Steuerblock 12 weist dabei geeignete Steuerventile auf. Die Steuerung der Zuführeinheit 2 erfolgt vorzugsweise pneumatisch oder auch hydraulisch. Grundsätzlich kann auch ein Elektromotorischer Antrieb vorgesehen sein, beispielsweise ein Servo-Direktantrieb.

Innerhalb des Schubteils 8 ist eine Schubeinheit 14 integriert, welche insbesondere als pneumatische oder hydraulische Schubeinheit 14 ausgebildet ist und hierzu einen Kolben mit einer Kolben- oder Schubstange 16 aufweist, die innerhalb des Schubteils in Zuführrichtung 4 verschiebbar ist. Hierzu weist das Schubteil 8 einen Kolbenraum auf, in dem der Kolben verschieblich ist. Der Kolbenraum ist von einer vorderen sowie hinteren Stirnwand begrenzt. Insbesondere die vordere Stirnwand bildet dabei einen Anschlag für die Verschiebung des Kolbens und damit der Schubstange 16 in Zuführrichtung 4.

Die Schubstange 16 reicht dabei in das vordere Aufnahmeteil 6 hinein. Dieses weist ein rohrförmiges Gehäuse 7 auf, welches einen zylindrischen Innenraum definiert. Innerhalb dieses zylindrischen Innenraums ist ein Kopfstück 18 gleitverschieblich gelagert. Eine Vorschubbewegung der Schubeinheit 14 wird mittelbar auf das Kopfstück 18 übertragen. Hierzu ist ein insbesondere als Druckfeder ausgebildetes Federelement 20 angeordnet, so dass die Schubbewegung der Schubeinheit 14 über das Federelement 20 auf das Kopfstück 18 übertragen wird. Im Ausführungsbeispiel ist weiterhin ein Schieberelement 22 zwischengeordnet, welches mit der Schubeinheit 14 fest verbunden und an diesem befestigt ist. Das Schieberelement 22 weist im Ausführungsbeispiel einen Fußbereich nach Art eines Kragens auf, an dem sich das Federelement 20 abstützt. Der Fußbereich ist nach Art einer Hülse ausgebildet, umgreift die Schubstange 16 und ist mit dieser über eine Schraube 24 verbunden. Das Kopfstück 18 weist in Richtung zur Schubeinheit 14 einen Halsbereich mit verringertem Durchmesser auf, so dass auch am Kopfstück 18 ein Kragen ausgebildet ist, an dem sich das Federelement 20 abstützt.

Das Schieberelement 22 weist ein vorderes Flachstück auf, welches also in etwa einen rechteckförmigen Querschnitt aufweist. Innerhalb dieses Flachstücks weist das Schieberelement 22 eine Nut 26 auf, innerhalb derer ein als Bolzen ausgebildeter Zapfen 28 geführt ist. Der Zapfen 28 ist dabei beidseitig innerhalb des Kopfstückes 18 gelagert.

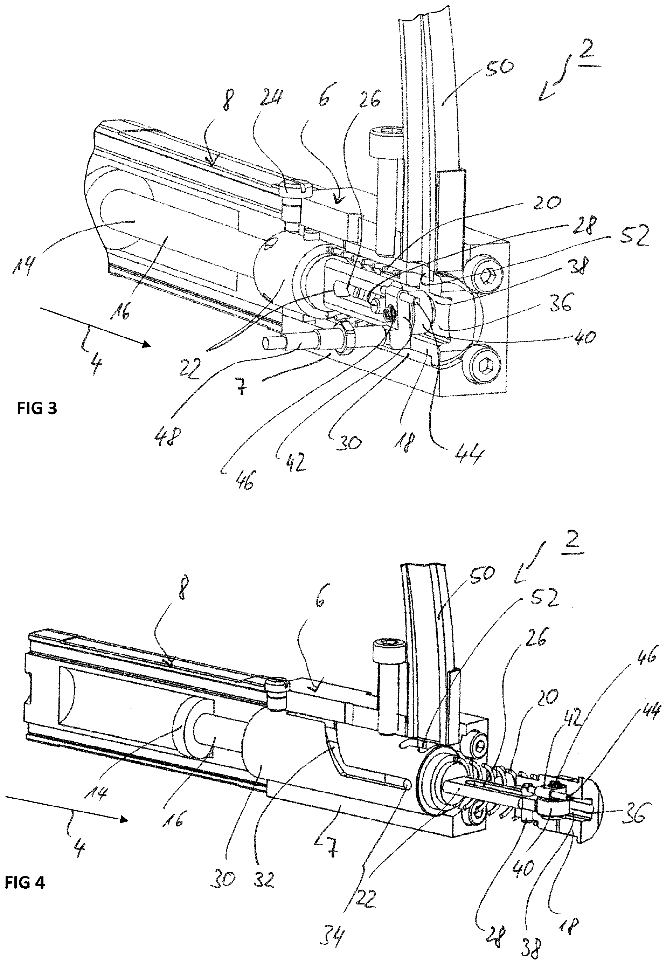

Das Kopfstück 18 sowie das Schieberelement 22 sind wiederum innerhalb einer Steuerhülse 30 gelagert. Diese ist im Gehäuse 7 ortsfest angeordnet. Die Steuerhülse 30 ist dabei über Schrauben 24 am Gehäuse 7 orts- und drehfest gehalten. Wie insbesondere aus der Fig. 4 hervorgeht, weist die Steuerhülse 30 eine Kurvenbahn 32 auf, die durch eine Nut mit geeignetem Verlauf gebildet ist. In diese Kurvenbahn 32 greift ein als Steuerstift ausgebildetes Steuerelement 34. Dieses ist als Querbolzen ausgebildet und im Ausführungsbeispiel am Schieberelement 22 befestigt, und zwar an dessen rückwärtigen Fußbereich. Das Steuerelement 34 wird daher bei einer Vorschubbewegung innerhalb der Kurvenbahn 32 entlang dieser zwangsgeführt. Die Kurvenbahn 32 ist dabei derart ausgebildet, dass das Schieberelement 22 um die Zuführrichtung 4 herum verdreht wird, und zwar insbesondere um 90°. Durch die Steuerhülse 30 in Verbindung mit dem Steuerelement 34 ist daher eine Drehvorrichtung gebildet.

Die Übertragung der Drehbewegung des Schieberelements 22 auf das Kopfstück 18 erfolgt über das Flachstück des Schieberelements 22. Hierdurch ist eine drehfeste Verbindung mit dem Kopfstück 18 erreicht. Das Kopfstück 18weist also einen komplementär zu dem Flachbereich des Schieberelements 22 ausgebildeten Führungskanal 36 auf.

Ein Teilabschnitt dieses Führungskanals 36 definiert dabei einen Aufnahmebereich 38, in den ein Verbindungselement, insbesondere eine Mutter 40 eingebracht wird. Dem Aufnahmebereich 38 ist dabei ein Klemmelement 42 zugeordnet, welches um eine Schwenkachse 44 entgegen der Federkraft eines weiteren Federelements 46 schwenkbeweglich am Kopfstück 18 gelagert ist. Das Klemmelement 42 ist in den Fig. 3 bis 5 erkennbar, wobei zur besseren Übersicht das Klemmelement 42 sowie auch ein Sensorelement 48 ohne die zugeordneten Teilbereiche des Kopfstückes 18 quasi freischwebend dargestellt sind.

Das weitere Federelement 46 stützt sich in einer Ausnehmung des Kopfstücks 18 ab und presst das Klemmelement 42 in Richtung zum Aufnahmebereich 38.

Das Sensorelement misst 48 einen Abstand zu einer Messfläche des Klemmelements 42. Die Messfläche ist dabei insbesondere am gegenüberliegenden Ende zur Schwenkachse 44 ausgebildet.

Seitlich am Gehäuse 7 des Aufnahmeteils 6 ist eine Zuführung 50 befestigt, im Ausführungsbeispiel ein Zuführschlauch. Über diesen wird eine jeweilige Mutter 40 im Betrieb in den Aufnahmebereich 38 eingebracht, insbesondere eingeschossen. Die Befestigung der Zuführung 50 erfolgt mit einer weiteren Schraube 24. Im Ausführungsbeispiel ist diese im Gehäuse7 eingeschraubt und klemmt sogleich die Steuerhülse 30. Dieser ist im rückwärtigen Bereich durch eine weitere Schraube 24, und zwar im Bereich des rückseitigen Endes des Schieberelements 22, zusätzlich gegen eine Verdrehung gesichert.

Um eine Zuführung in den Aufnahmebereich 38 zu ermöglichen, weisen sowohl das Gehäuse als auch die Steuerhülse 30 und das Kopfstück 18 eine jeweilige Zuführöffnung 52 auf, die quasi einen Zuführkanal für die jeweilige Mutter 50 zur Zuführung in den Aufnahmebereich 38 bilden. Dieser durch die Zuführöffnungen 52 gebildete Zuführkanal erstreckt sich dabei senkrecht, also in radialer Richtung zu der Zuführrichtung 4.

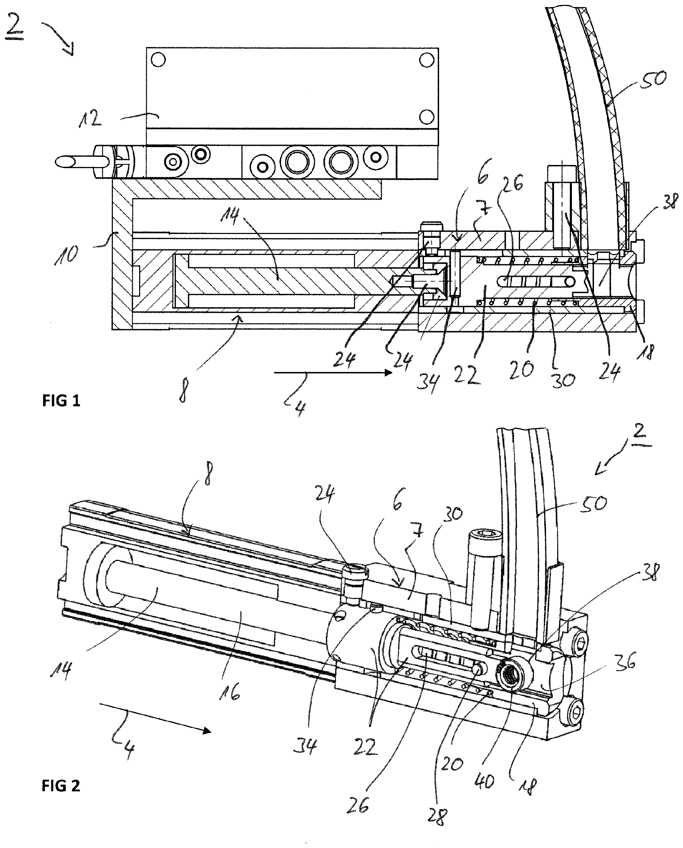

Der Betrieb der Zuführeinheit ist dabei wie folgt: In der in Fig. 2 dargestellten Ausgangsposition der Zuführeinheit 2, die zugleich eine Aufnahmeposition für die Mutter 40 definiert, wird eine Mutter 40 über die Zuführung 50 in den Aufnahmebereich 38 eingebracht. Hierbei verdrängt die Mutter 40 das in den Aufnahmebereich 38 gegen die Federkraft des weiteren Federelements 46 eingeschwenkte Klemmelement 42. Hierbei wird die Mutter 40 abgebremst. Gleichzeitig wird sie mittels des Klemmelements 42 in der definierten Position innerhalb des Flachkanals 36 im Aufnahmebereich 38 fixiert. Die Bewegung des Klemmelements 42 wird von dem Sensorelement 48 detektiert und an eine hier nicht näher dargestellte Steuereinheit übermittelt.

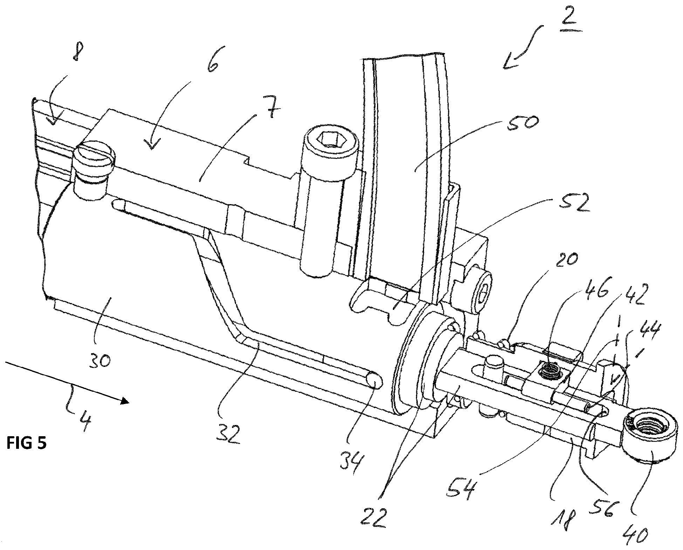

Die Zuführeinheit 2 ist nunmehr bereit zur Ausführung des Arbeitstaktes. Hierzu wird die Schubeinheit 14 aktiviert und in Zuführrichtung 4 versetzt. Die Steuerung der Schubeinheit 14 erfolgt mit Hilfe des Steuerblocks 12 durch die geeignete Ansteuerung von entsprechenden Ventilen. Bei der Vorschubbewegung wird der Vorschub von der Schubstange 16 mittels des Schieberelements 22 und dem ersten Federelement 20 auf das Kopfstück 18 übertragen. Eine Relativverschiebung erfolgt hierbei vorzugsweise noch nicht, das heißt eine Kompression des Federelements 20 erfolgt nicht. Das Kopfstück 18 wird daher gemeinsam mit dem Schieberelement 22 synchron in Zuführrichtung 4 bewegt. Aufgrund der durch die Steuerhülse 30 gebildeten Zwangsführung erfolgt eine Drehbewegung des Kopfstücks 18 und damit auch des Aufnahmebereichs 38 um 90°, bis die Mutter eine Zwischenposition erreicht. Bei Erreichung der Zwischenposition schlägt das Kopfstück 18 gegen einen ersten Anschlag 54 (vgl. Fig. 5) an. Dieser ist insbesondere durch ein Bauteil der Setzmaschine, insbesondere des Setzkopfes gebildet.

Ausgehend von Zwischenposition wird die Mutter 40 in eine in der Fig. 5 dargestellte Übergabeposition in Zuführrichtung 4 verschoben. Die Übergabeposition befindet sich bereits innerhalb des eigentlichen Setzkopfes. Hierzu wird die Vorschubbewegung der Schubeinheit 14 fortgesetzt, so dass das Schieberelement 22 weiter in Zuführrichtung 4 verschoben wird. Da durch den ersten Anschlag 54 das Kopfstück 18 fixiert ist, erfolgt nunmehr unter Komprimierung des ersten Federelements 20 eine Relativverschiebung des Schieberelements 22 zum Kopfstück 18. Die Mutter 40 wird daher aus dem Führungskanal 36 des Kopfstücks 18 nach vorne herausgedrückt. Fig. 5 zeigt daher die Endstellung in der Übergabeposition.

Fig. 4 zeigt ebenfalls eine Endstellung, jedoch eine Situation ohne Anschlag 54. Die Darstellung der Fig. 4 ist weitgehend ähnlich zu der Zwischenposition, bei der das Kopfstück 18 bereits gedreht ist. In der Zwischenposition befindet sich die Schubstange 16 - anders als in Fig. 4 dargestellt - jedoch noch in einer mittleren Position zwischen den beiden Stellungen, wie sie aus den Fig. 2, 3 sowie Fig. 4 zu entnehmen sind. Aus der Zwischenposition lässt sich die Schubstange 16 noch bis zu einem Anschlag in Zuführrichtung 4 in die in z.B. Fig. 4 oder Fig. 5 dargestellte Endposition verschieben. Dieser Anschlag ist dabei insbesondere durch die vordere Stirnwand des Kolbenraums gebildet, in dem die Schubstange 16 gleitverschieblich geführt ist.

Nach der Übergabe der Mutter 40 an die Übergabeposition fährt die Vorschubeinheit entgegen der Zuführrichtung 4 wieder zurück. Der Bewegungsablauf ist nunmehr in umgekehrter Reihenfolge: Zunächst wird das Schieberelement 22 relativ zum Kopfstück 18 zurückgeführt. Das Kopfstück 18 wird daher weiterhin mittels des ersten Federelements 20 gegen den Anschlag 54 gepresst. Sobald der Zapfen 28 innerhalb der Nut 26 gegen das vordere Ende der Nut 26 anschlägt, ist die Ausgangs-Relativposition (Grundposition) zwischen Schieberelement 22 und Kopfstück 18 erreicht. Das vordere Ende der Nut 26 bildet insoweit einen zweiten Anschlag 56. In diesem Zustand ist die Zwischenposition gemäß Fig. 4 wieder erreicht. Anschließend daran erfolgt eine synchrone Rückstellbewegung des Schieberelements 22 gemeinsam mit dem Kopfstück 18. Dabei erfolgt wieder die Rückdrehung in die Ausgangsposition, wie sie in Fig. 1 dargestellt ist.

Der Arbeitszyklus beginnt dann durch Einbringen einer weiteren Mutter 40 von Neuem.

### Bezugszeichenliste

- 2: Zuführeinheit
- 4: Zuführrichtung
- 6: Aufnahmeteil
- 7: Gehäuse
- 8: Schubteil
- 10: Halterung
- 12: Steuerblock
- 14: Schubeinheit
- 16: Schubstange
- 18: Kopfstück
- 20: erstes Federelement
- 22: Schieberelement
- 24: Schraube
- 26: Nut
- 28: Zapfen
- 30: Steuerhülse
- 32: Kurvenbahn
- 34: Steuerelement
- 36: Flachkanal
- 38: Aufnahmebereich
- 40: Mutter
- 42: Klemmelement
- 44: Schwenkachse
- 46: weiteres Federelement
- 48: Sensorelement
- 50: Zuführung
- 52: Zuführöffnung
- 54: erster Anschlag
- 56: zweiter Anschlag

## Patentansprüche

1. Zuführeinheit (2) zur Zuführung von Verbindungselementen, insbesondere von Muttern (40), aus einer Aufnahmeposition entlang einer Zuführrichtung (4) an eine Übergabeposition mit einem Aufnahmeteil (6), dem ein jeweiliges Verbindungselement insbesondere einzelweise zuführbar ist, sowie mit einem Kopfstück (18), welches in dem Aufnahmeteil (6) verschieblich gelagert ist und das einen Aufnahmebereich (38) für das Verbindungselement aufweist
**gekennzeichnet durch**
- eine Schubeinheit (14) zum Verschieben des Kopfstücks (18) entlang der Zuführrichtung (4) bis zu einer Zwischenposition,
- eine Drehvorrichtung (30, 34), welche zur Drehung des Kopfstücks (18) beim Vorschub desselben in Zuführrichtung (4) ausgebildet ist, so dass der Aufnahmebereich (38) um die Zuführrichtung (4) aus einer ersten Drehposition in der Aufnahmeposition in eine zweite Drehposition in der Zwischenposition verdreht wird,
- mit einem Schieberelement (22), welches mit der Schubeinheit (14) gekoppelt ist und das aus der Zwischenposition bis zur Übergabeposition relativ zum Kopfstück (18) innerhalb desselben in Zuführrichtung (52) versetzbar ist, so dass ein Verbindungselement aus dem Kopfstück (18) heraus an die Übergabeposition verbracht wird.

2. Zuführeinheit (2) nach dem vorhergehenden Anspruch,
**dadurch gekennzeichnet,**
**dass** die Drehvorrichtung eine mechanische Zwangsführung ausbildet und hierzu insbesondere eine Steuerhülse (30) aufweist.

3. Zuführeinheit (2) nach dem vorhergehenden Anspruch,
**dadurch gekennzeichnet,**
**dass** die mechanische Zwangsführung eine vorgegebene Kurvenbahn (32) umfasst, die bei der Vorschubbewegung mit einem Steuerelement (34) zur Drehung des Kopfstücks (18) zusammenwirkt.

4. Zuführeinheit (2) nach einem der vorhergehenden Ansprüche,
**dadurch gekennzeichnet,**
**dass** das Kopfstück (18) an der Schubeinheit (14) federnd gelagert ist.

5. Zuführeinheit (2) nach einem der vorhergehenden Ansprüche,
**dadurch gekennzeichnet,**
**dass** das Schieberelement (22) an der Schubeinheit (14) befestigt ist.

6. Zuführeinheit (2) nach einem der vorhergehenden Ansprüche,
**dadurch gekennzeichnet,**
**dass** das Kopfstück (18) federnd gegen einen mechanischen Anschlag (56) der Schubeinheit (14) oder des Schieberelements (22) gepresst ist.

7. Zuführeinheit (2) nach einem der vorhergehenden Ansprüche,
**dadurch gekennzeichnet,**
**dass** das Schieberelement (22) und das Kopfstück (18) mittels einer Nut-Zapfen Führung (26, 28) aneinander geführt sind.

8. Zuführeinheit (2) nach einem der vorhergehenden Ansprüche,
**dadurch gekennzeichnet,**
**dass** das Schieberelement (22) am Kopfstück (18) drehfest gelagert ist und über das Schieberelement (22) eine Drehbewegung auf das Kopfstück (18) übertragbar ist.

9. Zuführeinheit (2) nach einem der vorhergehenden Ansprüche,
**dadurch gekennzeichnet,**
**dass** im montierten Zustand die Vorschubbewegung des Kopfstückes (18) durch einen weiteren mechanischen Anschlag (54) begrenzt ist.

10. Zuführeinheit (2) nach einem der vorhergehenden Ansprüche,
**dadurch gekennzeichnet,**
**dass** das Aufnahmeteil (6) eine Zuführöffnung (52) aufweist, über die das Verbindungselement winklig, insbesondere senkrecht zur Zuführrichtung (4) in den Aufnahmebereich (38) einbringbar ist.

11. Zuführeinheit (2) nach einem der vorhergehenden Ansprüche,
**dadurch gekennzeichnet,**
**dass** das Kopfstück (18) ein Klemmelement (42) zur klemmenden Fixierung des Verbindungselements im Kopfstück (18) aufweist.

12. Zuführeinheit (2) nach dem vorhergehenden Anspruch,
**dadurch gekennzeichnet,**
**dass** das Klemmelement (42) federnd in den Aufnahmebereich (38) eindringt, sofern sich im Aufnahmebereich (38) kein Verbindungselement befindet.

13. Zuführeinheit (2) nach einem der beiden vorhergehenden Ansprüche,
**dadurch gekennzeichnet,**
**dass** das Klemmelement (42) schwenkbar am Kopfstück (18) gelagert ist.

14. Zuführeinheit (2) nach einem der vorhergehenden Ansprüche,
**dadurch gekennzeichnet,**
**dass** ein Sensorelement (48) zur Erfassung des Vorhandenseins eines Verbindungselements im Aufnahmebereich (38) angeordnet ist, wobei das Sensorelement (48) zur Erfassung einer Bewegung des Klemmelements (42) ausgebildet ist.

## Claims

1. Feed unit (2) for feeding connecting elements, in particular nuts (40), from a receiving position along a direction of feed (4) to a delivery position, having a receiving part (6) to which a respective connecting element can be fed, in particular individually, and having a head piece (18), which is displaceably mounted in the receiving part (6) and which has a receiving region (38) for the connecting element,
**characterized by**
- a pushing unit (14) for displacing the head piece (18) along the direction of feed (4) up to an intermediate position,
- a rotary device (30, 34), which is configured to rotate the head piece (18) during the forward feed of the same in the direction of feed (4), so that the receiving region (38) is twisted about the direction of feed (4) out of a first rotational position in the receiving position into a second rotational position in the intermediate position,
- comprising a slider element (22), which is coupled with the pushing unit (14) and which is shiftable out of the intermediate position up to the delivery position relative to the head piece (18), within this same, in the direction of feed (52), so that a connecting element is transported out of the head piece (18) to the delivery position.

2. Feed unit (2) according to the preceding claim,
**characterized**
**in that** the rotary device forms a mechanical positive guide and, to this end, has in particular a control sleeve (30).

3. Feed unit (2) according to the preceding claim,
**characterized**
**in that** the mechanical positive guide comprises a predefined cam track (32), which, in the forward feed movement, cooperates with a control element (34) for the rotation of the head piece (18).

4. Feed unit (2) according to one of the preceding claims,
**characterized**
**in that** the head piece (18) is resiliently mounted on the pushing unit (14).

5. Feed unit (2) according to one of the preceding claims,
**characterized**
**in that** the slider element (22) is attached to the pushing unit (14).

6. Feed unit (2) according to one of the preceding claims,
**characterized**
**in that** the head piece (18) is resiliently pressed against a mechanical stop (56) of the pushing unit (14) or of the slider element (22).

7. Feed unit (2) according to one of the preceding claims,
**characterized**
**in that** the slider element (22) and the head piece (18) are guided relative to each other by means of a groove-pin guide (26, 28).

8. Feed unit (2) according to one of the preceding claims,
**characterized**
**in that** the slider element (22) is mounted in a rotationally secure manner on the head piece (18) and, via the slider element (22), a rotational movement is transmissible to the head piece (18).

9. Feed unit (2) according to one of the preceding claims,
**characterized**
**in that**, in the fitted state, the forward feed movement of the head piece (18) is limited by a further mechanical stop (54).

10. Feed unit (2) according to one of the preceding claims,
**characterized**
**in that** the receiving part (6) has a feed opening (52), via which the connecting element can be inserted into the receiving region (38) at an angle to, in particular perpendicular to the direction of feed (4).

11. Feed unit (2) according to one of the preceding claims,
**characterized**
**in that** the head piece (18) has a clamping element (42) for the clamping fixation of the connecting element in the head piece (18).

12. Feed unit (2) according to the preceding claim,
**characterized**
**in that** the clamping element (42) penetrates resiliently into the receiving region (38), insofar as no connecting element is present in the receiving region (38).

13. Feed unit (2) according to one of the two preceding claims,
**characterized**
**in that** the clamping element (42) is pivotably mounted on the head piece (18).

14. Feed unit (2) according to one of the preceding claims,
**characterized**
**in that** a sensor element (48) is arranged to register the presence of a connecting element in the receiving region (38), wherein the sensor element (48) is configured to register a movement of the clamping element (42).

## Revendications

1. Unité d'amenée (2) pour l'amenée d'éléments d'assemblage, en particulier d'écrous (40), à partir d'une position de logement le long d'une direction d'amenée (4) à une position de transfert avec une partie de logement (6), à laquelle un élément d'assemblage respectif peut être amené en particulier individuellement, ainsi qu'avec une pièce de tête (18), qui est supportée de façon coulissante dans la partie de logement (6) et qui présente une zone de logement (38) pour l'élément d'assemblage,
**caractérisée par**
- une unité de poussée (14) pour déplacer la pièce de tête (18) le long de la direction d'amenée (4) jusqu'à une position intermédiaire,
- un dispositif de rotation (30, 34), qui est configuré pour faire tourner la pièce de tête (18) lors de l'avance de celle-ci dans la direction d'amenée (4), de telle manière que la zone de logement (38) soit tournée autour de la direction d'amenée (4) depuis une première position de rotation dans la position de logement jusqu'à une deuxième position de rotation dans la position intermédiaire,
- avec un élément de coulisseau (22), qui est couplé avec l'unité de poussée (14) et qui peut être déplacé depuis la position intermédiaire jusqu'à la position de transfert par rapport à la pièce de tête (18) à l'intérieur de celle-ci dans la direction d'amenée (52), de telle manière qu'un élément d'assemblage soit transporté hors de la pièce de tête (18) à la position de transfert.

2. Unité d'amenée (2) selon la revendication précédente, **caractérisée en ce que** le dispositif de rotation forme un guidage mécanique forcé et présente à cet effet en particulier une douille de commande (30).

3. Unité d'amenée (2) selon la revendication précédente, **caractérisée en ce que** le guidage mécanique forcé comprend un chemin incurvé prédéterminé (32), qui coopère avec un élément de commande (34) lors du mouvement d'avance pour la rotation de la pièce de tête (18) .

4. Unité d'amenée (2) selon l'une quelconque des revendications précédentes, **caractérisée en ce que** la pièce de tête (18) est montée élastiquement sur l'unité de poussée (14).

5. Unité d'amenée (2) selon l'une quelconque des revendications précédentes, **caractérisée en ce que** l'élément de coulisseau (22) est fixé à l'unité de poussée (14).

6. Unité d'amenée (2) selon l'une quelconque des revendications précédentes, **caractérisée en ce que** la pièce de tête (18) est pressée élastiquement contre une butée mécanique (56) de l'unité de poussée (14) ou de l'élément de coulisseau (22).

7. Unité d'amenée (2) selon l'une quelconque des revendications précédentes, **caractérisée en ce que** l'élément de coulisseau (22) et la pièce de tête (18) sont guidés l'un sur l'autre au moyen d'un guidage par rainure-tourillon (26, 28).

8. Unité d'amenée (2) selon l'une quelconque des revendications précédentes, **caractérisée en ce que** l'élément de coulisseau (22) est monté sans rotation sur la pièce de tête (18) et un mouvement de rotation peut être transmis à la pièce de tête (18) par l'élément de coulisseau (22).

9. Unité d'amenée (2) selon l'une quelconque des revendications précédentes, **caractérisée en ce qu'**à l'état monté le mouvement d'avance de la pièce de tête (18) est limité par une autre butée mécanique (54).

10. Unité d'amenée (2) selon l'une quelconque des revendications précédentes, **caractérisée en ce que** la partie de logement (6) présente une ouverture d'amenée (52), par laquelle l'élément d'assemblage peut être introduit angulairement dans la zone de logement (38), en particulier perpendiculairement à la direction d'amenée (4).

11. Unité d'amenée (2) selon l'une quelconque des revendications précédentes, **caractérisée en ce que** la pièce de tête (18) présente un élément de serrage (42) pour la fixation par serrage de l'élément d'assemblage dans la pièce de tête (18).

12. Unité d'amenée (2) selon la revendication précédente, **caractérisée en ce que** l'élément de serrage (42) pénètre élastiquement dans la zone de logement (38), dans la mesure où aucun élément d'assemblage ne se trouve dans la zone de logement (38).

13. Unité d'amenée (2) selon l'une quelconque des deux revendications précédentes, **caractérisée en ce que** l'élément de serrage (42) est monté de façon pivotante sur la pièce de tête (18).

14. Unité d'amenée (2) selon l'une quelconque des revendications précédentes, **caractérisée en ce qu'**un élément de capteur (48) est disposé dans la zone de logement (38) pour détecter la présence d'un élément d'assemblage, dans laquelle l'élément de capteur (48) est configuré de façon à détecter un mouvement de l'élément de serrage (42).
